# EUROPÄISCHE PATENTANMELDUNG

(11) **EP 2 166 648 A1**
(43) Veröffentlichungstag der Anmeldung: **24.03.2010**
(21) Anmeldenummer: 08016644.0
(22) Anmeldetag: 22.09.2008
(51) Int. Cl.: H02K 11/00, H02K 5/136

(54) **Elektrische Maschine mit druckfest gekapseltem Drehgeber**

(71) Anmelder: Siemens Aktiengesellschaft, 80333 München (DE)
(72) Erfinder: Gamisch, Alfred, AT-4982 Obernberg (AT); Knon, Helmut, 94051 Hauzenberg (DE)

(57) **Zusammenfassung**

Eine explosionsgeschützte elektrische Maschine soll hinsichtlich des Drehgebers günstiger und flexibler gestaltet werden können. Daher wird eine elektrische Maschine mit einem Gehäuseteil (1), einer Welle (2) die in oder an dem Gehäuseteil gelagert ist, einem Drehgeber (3), der mit der Welle (2) verbunden ist und eine Drehbewegung der Welle (2) erfasst, sowie einer druckfesten Kapselung, die den Drehgeber (3) umgibt, vorgeschlagen. Die druckfeste Kapselung wird mit einer Haube (5) und dem Gehäuseteil (1) gebildet. Damit kann auch ein marktüblicher und standardnaher, nicht explosionsgeschützter Drehgeber für eine explosionsgeschützte Maschine verwendet werden.

## Beschreibung

Die vorliegende Erfindung betrifft eine elektrische Maschine mit einem Gehäuseteil, einer Welle, die in oder an dem Gehäuseteil gelagert ist, einem Drehgeber, der mit der Welle verbunden ist und eine Drehbewegung der Welle erfasst, sowie einer druckfesten Kapselung, die den Drehgeber umgibt.

Unter einer druckfesten Kapselung wird hier eine Kapselung gemäß der europäischen Norm EN 60079-1 verstanden. Die druckfeste Kapselung hat den Zweck, dass Funken oder Flammen, die beispielsweise bei Explosionen innerhalb der Kapselung auftreten können, nicht nach außen dringen können. Daher sind an den Fügestellen einer derartigen druckfesten Kapselung Zündspalte vorzusehen, deren Mindestanforderungen, wie z.B. Abmessungen hinsichtlich Breite und Länge in der oben genannten Norm genau vorgeschrieben sind. Die druckfeste Kapselung hat nicht den Zweck einer hermetischen Abriegelung. Vielmehr dienen die Zündspalte zum Abkühlen und zur Druckentspannung einer Flamme, sodass diese erlischt. Darüber hinaus müssen druckfeste Kapselungen gewährleisten können, dass bestimmte Oberflächentemperaturen der Kapselung nicht überschritten werden, sodass sich brennbare Stoffe in der Umgebung der Kapselung nicht entzünden können.

Bislang sind explosionsgeschützte oder druckfest gekapselte Drehgeber bekannt, die beispielsweise an einen Motor angebaut werden können. Der Drehgeber besitzt z.B. eine eigene Welle, die mithilfe einer Kupplung an die Welle des Motors drehfest montiert werden kann. Dadurch erhöht sich die axiale Länge des Motors unter Umständen erheblich. Außerdem sind die druckfest gekapselten Drehgeber verhältnismäßig teuer.

Die Aufgabe der vorliegenden Erfindung besteht somit darin, eine elektrische Maschine bereitzustellen, die auf günstigere Weise mit einem Drehgeber in einer druckfest gekapselten Haube ausgestattet werden kann.

Erfindungsgemäß wird diese Aufgabe gelöst durch eine elektrische Maschine mit einem Gehäuseteil, einer Welle, die in oder an dem Gehäuseteil gelagert ist, einem Drehgeber, der mit der Welle verbunden ist und eine Drehbewegung der Welle erfasst, sowie einer druckfesten Kapselung, die den Drehgeber umgibt, wobei die druckfeste Kapselung mit einer Haube und dem Gehäuseteil gebildet ist.

In vorteilhafter Weise ist es durch die mehrkomponentige Kapselung mit der Haube und dem Gehäuseteil möglich, einen standardnahen nicht-explosionsgeschützten Drehgeber für die elektrische Maschine einzusetzen. Dadurch können die elektrischen Maschinen mit explosionsgeschützten Drehgebern deutlich günstiger hergestellt werden.

Vorzugsweise ist der Drehgeber ein Hohlwellengeber. In diesem Fall lässt er sich auf die Welle der elektrischen Maschine aufstecken, sodass in der Regel axialer Bauraum eingespart werden kann, gegenüber Drehwellengebern mit eigener Welle.

Prinzipiell ist aber auch der Anbau eines Vollwellengebers möglich. Dabei wird die Haube ohne axiale Wellendurchführung ausgeführt.

Gemäß einer speziellen Ausführungsform kann der Drehgeber aus der Haube entnommen werden. Dies hat den Vorteil, dass er kostengünstig ausgetauscht werden kann.

Weiterhin kann die Haube unter Bildung eines Zündspalts an das Motorteil angeschraubt sein. Damit lässt sich je nach Bedarf an die elektrische Maschine ein explosionsgeschützter oder nicht-explosionsgeschützter Drehgeber leicht anbringen.

Entsprechend einer weiteren Ausführungsform ist vorgesehen, dass ein Kabel des Drehgebers durch die Haube nach außen geführt ist. Damit kann das Gebersignal zu einer externen Auswerteeinheit geliefert werden. Insbesondere wird dabei das Kabel mit einer druckfesten Kabelverschraubung in der Haube befestigt. Diese Kabelverschraubung ist einerseits einfach zu montieren und gewährleistet andererseits die geforderten Zündspalte für druckfeste Kapselung.

Alternativ oder zusätzlich kann ein Kabel des Drehgebers auch durch das Gehäuseteil ins Innere der elektrischen Maschine geführt sein. Dies ist dann notwendig, wenn ein Anschluss des Drehgebers im Hauptanschlusskasten des Motors erwünscht wird. Die Durchführung muss dann auch druckfest ausgeführt sein.

Des Weiteren kann die Welle der elektrischen Maschine durch eine Wellendurchführung in der Haube nach außen ragen. Dies erfordert zwar an der Fügestelle einen weiteren Zündspalt, aber es lässt sich dann auf der Welle außerhalb der Haube ein Lüfter befestigen, sodass die elektrische Maschine mit Eigenbelüftung betrieben werden kann.

Die folgende Erfindung wird nun anhand der beigefügten Zeichnungen näher erläutert, in denen zeigen:
- FIG 1: einen Querschnitt durch ein Teil eines Elektromotors mit erfindungsgemäß gekapseltem Drehgeber ohne Eigenlüfter und
- FIG 2: einen Querschnitt durch einen Teil eines Elektromotors mit erfindungsgemäß gekapseltem Drehgeber und Eigenlüfter.

Die nachfolgend geschilderten Ausführungsbeispiele stellen bevorzugte Ausführungsformen der vorliegenden Erfindung dar.

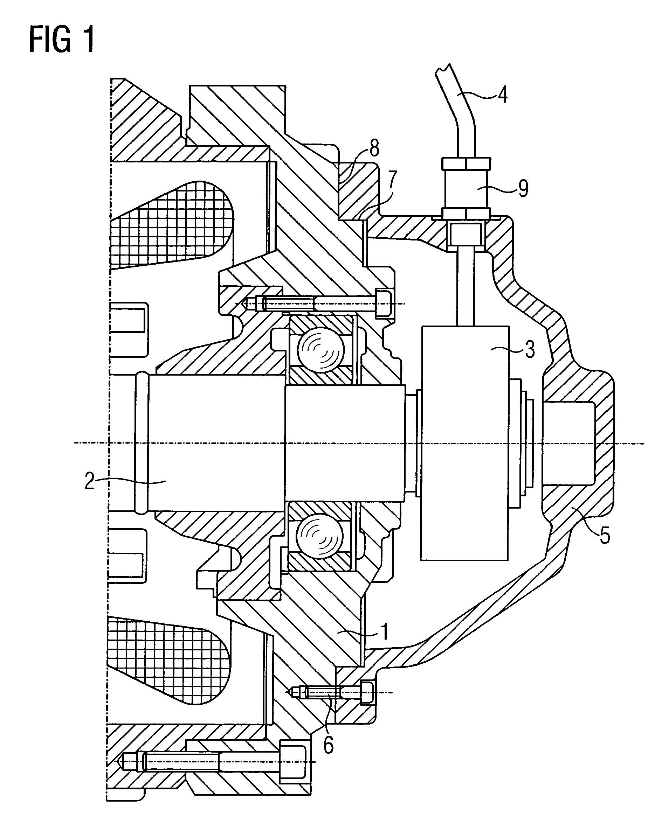

In dem Beispiel von FIG 1 ist ein Teil eines Elektromotors 8 (BS-Seite) im Querschnitt dargestellt, der der Abtriebsseite gegenüber liegt. Speziell ist ein Lagerschild 1 zu erkennen, das hier auch als Gehäuseteil bezeichnet ist, und in dem eine Welle 2 des Elektromotors gelagert ist. Diese Welle 2 ragt in axialer Richtung deutlich über das Lagerschild 1 hinaus. Auf den hinausragenden Teil ist ein nicht-explosionsgeschützter Drehgeber 3 montiert. Ein derartiger standardnaher Drehgeber, hier als Hohlwellengeber ausgebildet, kann kostengünstig erworben werden und bedarf nur eines sehr geringen Bauraums, verglichen mit einem Drehgeber, der eine eigene Welle besitzt und mit einer Kupplung an die Welle des Elektromotors angebracht werden muss. Die Signale des Drehgebers 3 werden über ein Kabel 4 weitergeleitet. Prinzipiell kann das Kabel 4 nach außen z.B. zu einer externen Auswerteeinrichtung oder aber in das Innere des Motors beispielsweise durch das Lagerschild 1 zum Hauptanschlusskasten geführt werden.

Der Drehgeber 3 ist nun im vorliegenden Beispiel durch eine Haube 5 aus Metall druckfest gekapselt. Die gesamte Kapselung ist hier im Wesentlichen zweiteilig ausgebildet und wird durch das Lagerschild 1 und die Haube 5 gebildet. Die Haube 5 ist hierzu mithilfe von Schrauben 6 an das Lagerschild 1 angeschraubt. Zur Zentrierung besitzt das Lagerschild 1 eine umlaufende Schulter 7 und die Haube 5 eine entsprechende kreisförmige Vertiefung. An der Fügestelle 8 (einschließlich Schulter 7) zwischen der Haube 5 und dem Lagerschild 1 ergibt sich ein Zündspalt, der gewährleistet, dass keine Flammen und Funken aus dem Bereich innerhalb der Haube 5 nach außen unter den in der europäischen Norm EN 60079 ff definierten Bedingungen dringen.

Das Kabel 4 des Drehgebers 3 ist durch die Haube 5 geführt. Hierzu ist in der Haube 5 eine druckfeste Kabelverschraubung 9 vorgesehen. Sie gewährleistet ebenfalls, dass Flammen und Funken an dieser Durchführungsstelle nicht nach außen dringen können.

Entsprechend dem Hauptgedanken der Erfindung ist somit eine Kapselung des nicht-explosionsgeschützten Drehgebers 3 mit einer druckfesten Haube 5 aus Metall gewährleistet. Diese ist auch als geschlossene Ausführung, d.h. ohne axiale Wellendurchführung, erhältlich (vgl. FIG 1).

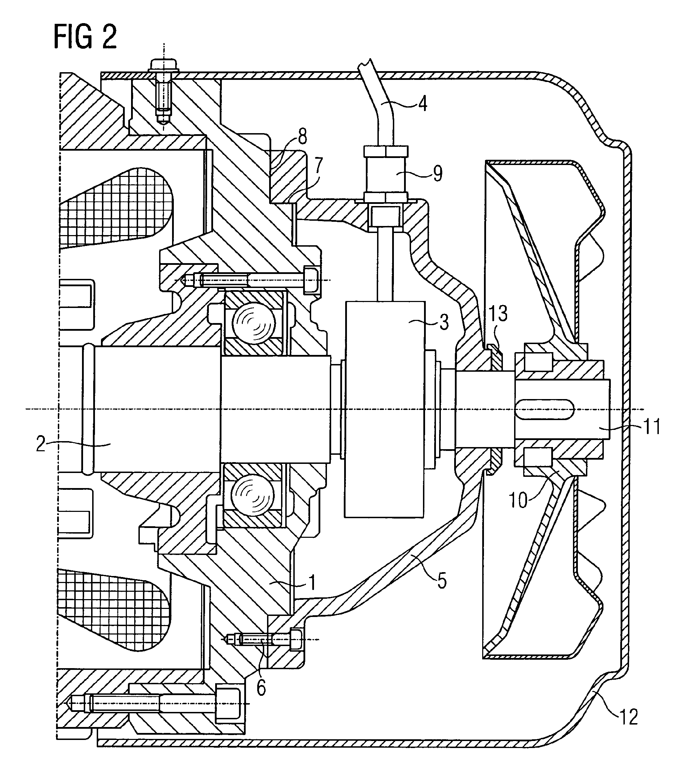

Entsprechend der zweiten Ausführungsform gemäß FIG 2 ist der Elektromotor zusätzlich mit einem Lüfter 10 ausgestattet. Die übrigen Komponenten des Elektromotors entsprechen im Wesentlichen denen des Motors von FIG 1. Die Welle 2 besitzt hier jedoch einen Wellenstumpf 11, auf dem der Lüfter 10 drehfest montiert ist. Die gesamte belüftungsseitige (BS) Stirnseite des Elektromotors ist mit einer Lüfterhaube 12 abgedeckt, in der der Lüfter 10 läuft.

Wahlweise kann der Lüfter auch entfallen und das freie Wellenende als Antrieb verwendet werden. Alternativ kann auch nach dem Lüfter noch auf der Welle ein Sitz für einen Antrieb vorgesehen werden.

Die Haube 5 für die druckfeste Kapselung besitzt hier also einen Durchtritt für den Wellenstumpf 11. Dieser Wellendurchtritt ist mit einem normgerechten Zündspalt ausgeführt. Die Haube 5 ist gegenüber der Welle 2 bzw. dem Wellenstumpf 11 z.B. mit einem Axialwellendichtring 13 abgedichtet. Dieser ist entsprechend der gewünschten Schutzart ausgeführt. Die Welle 2 kann aber auch für andere Zwecke, z.B. für die Ankopplung weiterer Elemente nach außen geführt sein.

Aufgrund der erfindungsgemäßen Kapselung durch eine Haube 5 und ein Gehäuseteil, z.B. ein Lagerschild 1, kann ein marktüblicher Drehgeber (darunter sind alle Anbaugeräte zur Erfassung der Drehzahl oder Position zu verstehen) entweder mit Hohl- oder Vollwelle auch in explosionsgefährdeten Umgebungen eingesetzt werden. Beim Bau einer elektrischen Maschine mit druckfester Kapselung ist man somit nicht länger an separate explosionsgeschützte Drehgeber gebunden. Vielmehr können nicht-explosionsgeschützte Maschinen und explosionsgeschützte Maschinen mit dem gleichen Drehgebertyp ausgestattet werden, was insgesamt die Herstellungskosten reduziert.

Da keine Bindung an die explosionsgeschützten Drehgeber mehr besteht, ist man bei der Gestaltung der Wellendurchmesser z.B. für das Antriebswellenende, flexibler. Außerdem kann die Gesamtbaulänge eines Motors bzw. einer elektrischen Maschine verkürzt werden, da kleinere Drehgeber insbesondere ohne eigene Welle genutzt werden können.

## Patentansprüche

1. Elektrische Maschine mit
- einem Gehäuseteil (1)
- einer Welle (2) die in oder an dem Gehäuseteil (1) gelagert ist,
- einem Drehgeber (3), der mit der Welle verbunden ist und eine Drehbewegung der Welle (2) erfasst, sowie
- einer druckfesten Kapselung, die den Drehgeber(3) umgibt,
**dadurch gekennzeichnet, dass**
- die druckfeste Kapselung mit einer Haube (5) und dem Gehäuseteil (1) gebildet ist.

2. Elektrische Maschine nach Anspruch 1, wobei der Drehgeber (3) ein Hohlwellengeber ist.

3. Elektrische Maschine nach Anspruch 1 oder 2, wobei der Drehgeber (3) aus der Haube (5) demontierbar ist.

4. Elektrische Maschine nach einem der vorhergehenden Ansprüche, wobei die Haube (5) unter Bildung eines Zündspalts an das Gehäuseteil (1) geschraubt ist.

5. Elektrische Maschine nach einem der vorhergehenden Ansprüche, wobei ein Kabel (4) des Drehgebers (3) durch die Haube (5) nach außen geführt ist.

6. Elektrische Maschine nach Anspruch 5, wobei das Kabel (4) mit einer druckfesten Kabelverschraubung (9) in der Haube (5) befestigt ist.

7. Elektrische Maschine nach einem der Ansprüche 1 bis 4, wobei ein Kabel (4) des Drehgebers (3) durch das Gehäuseteil (1) ins Innere der elektrischen Maschine geführt ist.

8. Elektrische Maschine nach einem der vorhergehenden Ansprüche, wobei die Welle (2) durch eine Wellendurchführung in der Haube (5) unter Bildung eines Zündspaltes nach außen ragt.

9. Elektrische Maschine nach Anspruch 8, wobei an der Welle (2) außerhalb der Haube (5) ein Lüfter (10) und/ oder ein Antriebselement befestigt ist.
